# EUROPÄISCHE PATENTANMELDUNG

(11) **EP 3 410 585 A1**
(43) Veröffentlichungstag der Anmeldung: **05.12.2018**
(21) Anmeldenummer: 18170310.9
(22) Anmeldetag: 02.05.2018
(51) Int. Cl.: H02K 29/08, H02K 1/27, H02K 11/215

(54) **ROTOR MIT SENSORMAGNET SOWIE DESSEN HERSTELLUNGSVERFAHREN**

(30) Priorität: 30.05.2017 DE 102017111797
(71) Anmelder: Bühler Motor GmbH, 90459 Nürnberg (DE)
(72) Erfinder: AHRENS, Matthias, 90455 Nürnberg (DE); SCHEER, Arnold, 04275 Leipzig (DE); BÖHM, Karl-Heinz, 91364 Unterleinleiter (DE); HETTYCH, Reiner, 90471 Nürnberg (DE)

(57) **Zusammenfassung**

Die vorliegende Erfindung betrifft einen Rotor (1) für einen bürstenlosen Gleichstrommotor, mit einem Rotormagneten (2) und einem Sensormagneten (3) für die Positionserfassung des Rotormagneten (2). Mit dem Ziel einer genauen gegenseitigen Ausrichtung und einer stabilen Verbindung zwischen den zuvor genannten Magneten, weist der Rotor (1) ein eingespritztes Füll-/Verbindungselement (4) auf, das den Rotormagneten (2) und den Sensormagneten (3) miteinander fest verbindet, wobei der Rotormagnet (2) und der Sensormagnet (3) jeweils Formschlusskonturen aufweisen und der Rotormagnet (2) und der Sensormagnet (3) verdrehsicher zueinander ausgerichtet sind. Des Weiteren betrifft die Erfindung ein Herstellungsverfahren für einen, insbesondere erfindungsgemäßen, Rotor, der für einen bürstenlosen Gleichstrommotor geeignet ist.

## Beschreibung

Die Erfindung betrifft einen Rotor für einen Drehstrommotor, insbesondere für einen Synchron-Drehstrommotor oder einen bürstenlosen Gleichstrommotor. Hierbei weist der Rotor einen Rotormagneten als durch ein Magnetfeld antreibbaren Rotationskörper und einen Sensormagneten für die Positions- bzw. Stellungserfassung des Rotormagneten auf. Des Weiteren betrifft die Erfindung ein Verfahren zur Herstellung des zuvor genannten Rotors, insbesondere für einen bürstenlosen Gleichstrommotor.

In der Industrie finden Drehstrommotoren, die unter den Begriff "Elektromotoren" fallen, zahlreiche und unterschiedliche Einsatzmöglichkeiten, beispielsweise als Antriebe für Fahrzeuge, Schiffe, Züge und Flugzeuge. Derartige Motoren bilden zu den bekannten Verbrennungsmotoren, wie z.B. Ottomotor oder Dieselmotor, eine effizientere und umweltfreundlichere Alternative, da sie einen hohen Wirkungsgrad bei der Umwandlung von elektrischer Energie in mechanische Bewegung, insbesondere Rotationsbewegung, haben und keine Emissionen wie beispielsweise Verbrennungsabgase abgeben. Drehstrommotoren werden nicht nur in den zuvor genannten Fortbewegungsmitteln eingesetzt, sondern auch in großer Zahl in Verarbeitungsmaschinen, Robotern, Haushaltsgeräten, Elektronikgeräten (beispielsweise Festplatten und CD-Spielern), Werkzeugen und Spielzeugen verwendet.

Dabei kann die Dimension bzw. Größe des Drehstrommotors abhängig von seiner Verwendung zwischen wenigen Millimetern und einigen Metern variieren.

Ein Drehstrommotor wird grundsätzlich durch einen Stator und einen Rotor gebildet, wobei der Stator der feststehende Teil und der Rotor der sich bewegende bzw. rotierende Teil des Elektromotors ist. Hierbei wird der Drehstrommotor mit einem Wechselstrom, insbesondere mit einem Dreiphasenwechselstrom bzw. "Drehstrom, betrieben. Dieser Drehstrom ist durch drei periodisch wechselnde Spannungen gekennzeichnet, die voneinander getrennt geführt werden, die gleiche Frequenz aufweisen und deren zeitliche Abläufe gegenüber den anderen beiden Spannungen um jeweils 120° vor- bzw. nachlaufend versetzt sind.

In einem Stator sind beispielsweise drei Elektromagnet-Spulen (oder - Spulenpaare) mit Leiterwicklungen ausgebildet und stern- bzw. strahlenförmig auf einer Ebene senkrecht zu und um eine Rotationsachse des Drehstrommotors angeordnet, wobei jede Spule zu den beiden benachbarten Spulen, wie beim Drehstrom, jeweils einen Winkel von ±120° aufweist. Sobald jede Spule aus dieser Anordnung mit einer eigenen Spannung aus dem Drehstrom versorgt wird, bildet sich ein Magnetfeld mit magnetischem Nord- und Südpol. Aufgrund der zeitlichen Änderungen der Spannungen des Drehstroms rotiert das erzeugte Magnetfeld auf der Ebene der Spulen und, je nach Anordnung oder elektrischer Speisung der Spulen, im oder gegen den Uhrzeigersinn. Die Rotationsbewegung ist hierbei abhängig von der Frequenz der Spannungen des Drehstroms, d.h. je höher die Frequenz ist, desto schneller ist die Rotationsbewegung des Magnetfelds.

Der Rotor eines Drehstrommotors liegt auf dessen Rotationsachse zwischen den Elektromagneten und ist im Wesentlichen achsensymmetrisch zu der Rotationsachse ausgeformt. Dabei darf/sollte der Rotor keine Unwucht aufweisen, um eine gleichmäßige Rotationsbewegung ausführen zu können und einen unnötigen Verschleiß beim Rotieren um die Rotationsachse zu vermeiden. Der Rotor weist einen magnetischen oder magnetisierbaren Körper auf, beispielsweise einen oder mehrere Permanentmagneten und/oder ferromagnetische/n Körper z.B. mit/aus Eisen. Aufgrund des Rotationsfreiheitsgrads des Rotors wird sich der Rotor wegen seines eigenen Magnetfelds nach dem erzeugten Magnetfeld der Elektromagneten richten und synchron mit diesem äußeren Magnetfeld mitrotieren; daher der Begriff "Synchron-Drehstrommotor".

Bürstenlose Gleichstrommotoren, auch unter den Begriffen "Brushless DC Motor", abgekürzt BLDC- oder BL-Motor, sowie "electronically commutated Motor", kurz EC-Motor, bekannt, sind im Wesentlich wie Synchron-Drehstrommotoren aufgebaut und weisen einen Stator mit Spulen und einen Rotor mit einem oder mehreren Permanentmagnete auf. Daher ist der Begriff "Bürstenloser Gleichstrommotor", wie einem Fachmann bewusst, auf den ersten Blick irreführend. Die Spulen des Stators werden durch eine elektronische Schaltung zeitlich versetzt angesteuert, auch als Kommutierung bezeichnet, um ein drehendes Magnetfeld bzw. Drehfeld zu erzeugen. Dadurch wird der Rotor in Rotation versetzt. Um Drehmomentschwankungen zu minimieren, hat der BLDC-Motor die Möglichkeit, eine Vielzahl von Spulen (beispielsweise 3 oder mehr, insbesondere 8, 12, 16 oder ein Vielfaches von 4) und höchstens eine gleiche Anzahl von Treibersignalen, d.h. ein eigenes Spannungssignal für jede Spule, zu verwenden.

Um die Ansteuerung bzw. Kommutierung der Spulen eines BLDC-Motors von der Rotorposition, der Rotordrehzahl und dem Drehmoment abhängig zu machen und im Gegenzug diese Eigenschaften durch die Kommutierung zu steuern, besteht die Notwendigkeit, die Rotorstellung und die Rotorbewegung zu erfassen bzw. zu messen. Diese Messung kann durch einen am Rotor angeordneten Sensor (beispielsweise ein Hall-Sensor) erfolgen und für eine sogenannte "sensorgesteuerte Kommutierung" verwendet werden. Alternativ oder zusätzlich kann die durch die an den Spulen vorbeibewegten Permanentmagneten induzierte Spannung gemessen werden und für eine sogenannte "sensorlose Kommutierung" verwendet werden.

Bei der sensorgesteuerten Kommutierung kann die Polarität der Permanentmagneten des Rotors (auch Rotormagneten genannt) gemessen werden, die durch das Drehfeld angetrieben werden; allerdings ist diese Messmöglichkeit ungenau. Daher wird der Rotor zusätzlich mit einem Sensormagneten ausgebildet, der auf Grund seiner Dimensionierung, Anordnung und seiner gegenüber dem Rotormagneten höheren Anzahl an Permanentmagneten eine genauere Messung zulässt. Da der Sensormagnet meist als separates Bauteil mit dem Rotormagneten verbunden bzw. befestigt wird, ist eine stabile Befestigung und genaue Ausrichtung wichtig.

Bekannterweise wird der Sensormagnet mittels Klebemittel mit dem Rotormagnet verbunden, wobei auf die Ausrichtung geachtet wird. Allerdings kann es hierbei zu Fehlern kommen, da unter Umständen die unterschiedlich gepolten Magnete nicht visuell erkennbar sind. Außerdem kann ein Klebemittel mit der Zeit seine Eigenschaften und somit Funktion verlieren und ist daher kein beständiges Befestigungsmittel. Eine weitere Möglichkeit, die Magnete zu verbinden, besteht im Löten oder in einem anderen Verfahren, das Hitze verwendet. Jedoch sind derartige Verfahren schädlich für die Magnete und können gar die magnetische Polarisierung stören bzw. zerstören.

Es ist somit die Aufgabe der vorliegenden Erfindung, die zuvor genannten Probleme zu überwinden; insbesondere soll hierzu ein Rotor bereitgestellt werden, bei dem die Ausrichtung von Rotormagnet und Sensormagnet keine Fehlstellung aufweist, die zu Messfehlern führen. Ebenso soll die Verbindung von Rotormagnet und Sensormagnet stabil und zuverlässig sein. Daher wird eine technische Lösung gesucht, einen Magnetgeber bzw. Sensormagneten orientiert, verlier- und verdrehsicher radial zu einer Welle, insbesondere zu einem Rotormagneten, anzubringen.

Diese Aufgabe wird erfindungsgemäß durch einen Rotor gemäß Patentanspruch 1 gelöst. Insbesondere wird erfindungsgemäß ein Rotor für einen bürstenlosen Gleichstrommotor, mit einem Rotormagneten und einem Sensormagneten für die Positionserfassung des Rotormagneten bereitgestellt, der durch ein eingespritztes Füll-/Verbindungselement gekennzeichnet ist, das den Rotormagneten und den Sensormagneten fest miteinander verbindet. Zusätzlich weisen der Rotormagnet und der Sensormagnet jeweils Formschlusskonturen auf. Der Rotormagnet und der Sensormagnet sind außerdem verdrehsicher zueinander ausgerichtet.

Durch die Erfindung entfallen oder vereinfachen sich mehrere Einzelschritte bei der Herstellung des Rotors.

Eine deutliche Vereinfachung liegt in der Montage von Sensormagnet und Rotormagnet, da lediglich die beiden Magnete zueinander grob positioniert werden müssen und bei geschickter Konstruktion mittels einer reinen Axialbewegung in ihre endgültige Anordnung bzw. Umspritzungslage gebracht werden, in der das Füllelement in die beiden Magnete ein- bzw. teilweise um diese gespritzt werden kann. Die nicht manuell erforderliche Feinjustierung der Magnete zueinander ist eine deutliche Erleichterung des Produktionsprozesses.

Durch die Formschlüsse, die sich durch die insbesondere komplementären Formschlusskonturen aus Formen und Aufnahmen bilden, und die magnetischen Polarisierungen der Komponenten eines erfindungsgemäßen Rotors können toleranzkritische Vorgänge zur Ausrichtung und Führung diese Komponenten ohne weitere Prozessschritte oder manuelle Eingriffe vorgenommen werden. Die Ausrichtungs-und Stellungsgenauigkeit des Sensormagneten zum Rotormagneten ist dadurch nur noch von den Fertigungstoleranzen der genannten Komponenten/Teile selbst abhängig und somit gut berechenbar.

Für eine manuelle Produktion, in der der Rotormagnet und der Sensormagnet mit ihren jeweiligen Formschlusskonturen in Wirkeingriff mit einem entsprechenden Werkzeug kommen und somit die gegenseitige Ausrichtung zueinander vorbestimmt ist, kann für den Benutzer des Werkzeugs eine polabhängige Markierung auf der Außenseite der von Rotor- und Sensormagnet-Einzelteilen erfolgen. Allerdings ist dies nicht notwendig, da die jeweiligen Formschlusskonturen der beiden Magnete vorzugsweise derart ausgebildet sind, dass diese nur in einer bestimmten Lage/Position in das Werkzeug eingesetzt werden können.

Der Rotor als Baugruppe ist äußerst robust und widerstandsfähig gegen Vibration und chemische Angriffe. Bezüglich der Positionsgenauigkeit und Befestigungsstabilität von Sensormagnet und Rotormagnet ist die Baugruppe, im Vergleich zum Stand der Technik, über eine sehr lange Betriebsdauer konstant.

Für die Magneten, insbesondere den Rotormagneten und/oder den Sensormagneten, können kunststoffgebundene Magnetwerkstoffe oder mit Kunststoff umspritzte, gesinterte Magnete mit hohen Feldstärken verwendet werden.

Um die zuvor genannten Vorteile jeweils zu nutzen, weist die Erfindung zusätzlich folgende vorteilhafte Ausführungsformen auf.

Vorzugsweise sind der Rotormagnet und der Sensormagnet jeweils einstückig ausgebildet und weisen eine Vielzahl von sich abwechselnden Magnetpolen auf, wobei die Magnetpole radial zu einer Achse des Rotors ausgerichtet sind.

Es hat sich ebenfalls als vorteilhaft herausgestellt, wenn der Rotor mit einer Welle fest verbunden und/oder geeignet ist, eine Welle entlang der Rotorachse aufzunehmen. Somit kann die Welle in diesen einstückigen Teileverbund integriert und mit ins Werkzeug einlegt werden. Alternativ kann die Welle in einem separaten, später erfolgenden Schritt mit dem einstückigen Magnetverbund aus Rotormagnet, Sensormagnet und Füllelement z.B. durch eine Presspassung montiert werden.

In einer weiteren vorteilhaften Ausführungsform weist der Rotormagnet und/oder der Sensormagnet eine Formschlusskontur zur Bildung des mindestens einen Formschlusses auf, insbesondere in Form einer Nase, Keil, Rampe und/oder Rundung.

Zur eigenständigen Führung sind die Formschlusskonturen vorteilhafterweise derart ausgebildet sind, dass diese bei einem axialen Zusammensetzen des Rotormagnets mit dem Sensormagnet selbstausrichtend sind.

Vorzugsweise sind der Rotormagnet und der Sensormagnet mittels magnetischer Kräfte, die beim axialen Zusammensetzen des Rotormagnets mit dem Sensormagnet wirken, selbstausrichtend.

Ebenso ist es von Vorteil, wenn der Sensormagnet ein Magnetelement und ein Distanzstück aufweist, wobei die Formschlusskontur an dem Distanzstück ausgebildet ist.

Besonders vorteilhaft ist eine weitere Ausführungsform, in der das Füll-/Verbindungselement zumindest teilweise oder vollständig unter oder um den Rotormagneten und den Sensormagneten gespritzt oder ausgebildet ist.

Ebenso weist der Rotor in einer bevorzugten Ausführungsform eine axiale Verliersicherung auf, die am hinteren Ende des Sensormagneten in Form eines Formschlusses, insbesondere eines Bundes, ausgebildet ist.

Vorzugsweise sind die Formschlusskonturen des Rotormagneten und des Sensormagneten jeweils komplementär zueinander ausgebildet.

Es hat sich des Weiteren als vorteilhaft herausgestellt, wenn die Formschlusskonturen des Rotormagneten und des Sensormagneten jeweils geeignet sind, mit einer Vorrichtung zum Herstellen des Rotors verdrehsicher in Wirkeingriff zu treten.

Der Erfindung liegt ferner die Aufgabe zugrunde ein Herstellungsverfahren anzugeben, in dem Produktionsschritte zusammengefasst werden können. Ziel ist es hierbei, Sensormagnet und Rotormagnet auf eine kostengünstige Art und Weise einstückig zu verbinden ohne zusätzliche Klebeprozesse in die Produktion aufzunehmen.

Die vorliegende Erfindung löst diese Aufgabe durch ein Herstellungsverfahren eines Rotors gemäß Patentanspruch 12. Dabei betrifft das Verfahren die Herstellung eines Rotors für einen bürstenlosen Gleichstrommotor, insbesondere eines erfindungsgemäßen Rotors, und weist hierfür die folgenden Schritte auf:
- Herstellen oder Bereitstellen eines Rotormagneten und eines Sensormagneten, wobei eine Formschlusskontur zur Bildung mindestens eines gegenseitigen Formschluss zwischen dem Rotormagneten und dem Sensormagneten als Verdrehsicherung bei dem Rotormagneten und/oder dem Sensormagneten ausgebildet ist/sind;
- Axiales Zusammenführen des Rotormagneten und des Sensormagneten, wobei der Rotormagnet und der Sensormagnet durch die Formschlusskontur in eine vorbestimmte Stellung zueinander geführt werden und verdrehsicher miteinander in Wirkeingriff treten; und
- Zumindest teilweises Unter- oder Umspritzen der zusammengeführten Magnete mit einem Füll- oder Verbindungswerkstoff zur Fixierung von Rotormagnet und Sensormagnet.

Aufgrund des Herstellverfahrens bieten sich Möglichkeiten, Verdreh- und Verliersicherung für den Magneten, insbesondere für den Sensormagneten und den Rotormagneten, ohne Mehrkosten zu integrieren.

Durch die Zwangsbewegungen basierend auf insbesondere komplementär ausgebildeten Formschlusskonturen und/oder gegenseitig anziehenden Magnetpolen kann der Produktionsprozess weitgehend automatisiert, prozesssicher und kostengünstig erfolgen. Beide Magnete werden hierbei in einem Produktionsschritt miteinander einstückig verbunden und durch das einzuspritzende Füllelement miteinander befestigt bzw. fixiert.

Die beschriebene Lösung erzeugt ein kompaktes Teil, das für den Produktionsablauf einfach im Handling ist.

Vorzugsweise erfolgt das axiale Zusammenführen durch eine von außen auf mindestens einen der Magnete gerichtete Kraft und/oder durch zwischen diesen Magneten wirkende magnetische Kräfte.

Des Weiteren weist das Herstellen des Rotormagneten und des Sensormagneten vorzugsweise ein Binden von Magnetwerkstoffen mit Kunststoff und/oder ein Sintern eines Magneten und ein Umspritzen des gesinterten Magneten mit Kunststoff auf.

Vorteilhafterweise werden vor dem axialen Zusammenführen der Rotormagnet und der Sensormagnet axial zueinander angeordnet.

Erfindungsgemäß kann der hierin beschriebene Rotor auch in einer Drehstrommaschine verwendet werden, d.h. nicht nur in einem Elektromotor, wie beispielsweise zuvor beschrieben, sondern auch in einem elektrischen Generator zur Umwandlung von mechanischer Energie (Rotationsbewegung) in Drehstrom.

Die Erfindung wird nachfolgend anhand von bevorzugten Ausführungsbeispielen unter Bezugnahme auf die beigefügten schematischen Zeichnungen näher erläutert. Es wird darauf hingewiesen, dass trotz der unterschiedlichen Strukturen und Ausgestaltungen der nachfolgend beschriebenen Ausführungsbeispiele dieselben Bezugszeichen für gleich bezeichnete Komponenten und Bauteile der erfindungsgemäßen Rotoren verwendet werden.

Es zeigen:
- Fig. 1: einen Querschnitt durch einen Rotor als erstes Ausführungsbeispiel gemäß der vorliegenden Erfindung;
- Fig. 2: eine perspektivische Ansicht auf den Rotor aus Fig. 1;
- Fig. 3: eine Explosionsansicht auf den Rotor aus Fig. 1;
- Fig. 4: einen Querschnitt durch einen weiteren Rotor als zweites Ausführungsbeispiel gemäß der vorliegenden Erfindung;
- Fig. 5: eine perspektivische Ansicht auf den Rotor aus Fig. 4;
- Fig. 6: eine Explosionsansicht auf den Rotor aus Fig. 4;
- Fig. 7: einen Querschnitt durch einen anderen Rotor als drittes Ausführungsbeispiel gemäß der vorliegenden Erfindung; und
- Fig. 8: eine Explosionsansicht auf den Rotor aus Fig. 7.

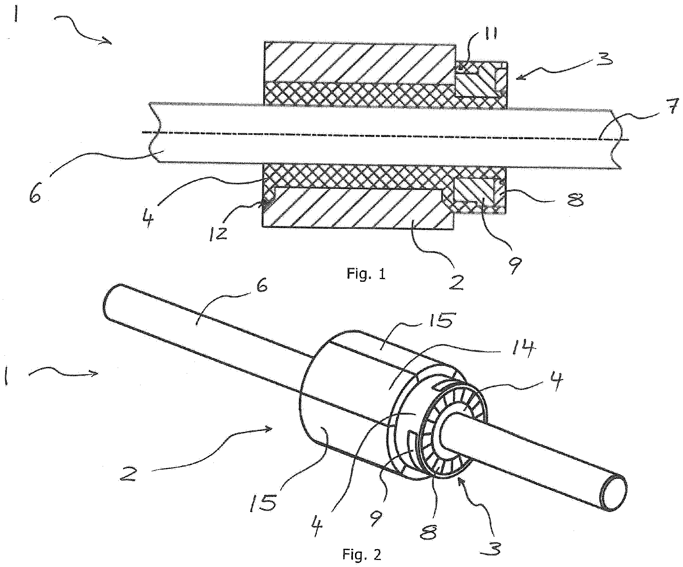

Fig. 1 zeigt einen Querschnitt durch einen Rotor 1 in einem ersten bevorzugten Ausführungsbeispiel gemäß der vorliegenden Erfindung. Der Rotor 1 weist einen Rotormagneten 2 und einen Sensormagneten 3 auf, die mittels eines eingespritzten Füll-/Verbindungselements 4 fest miteinander verbunden sind. Der Rotormagnet 2 ist hohlzylindrisch und der Sensormagnet 3 ringförmig ausgebildet, wobei die Wellen-/Rotorachse 7 der innerhalb des Rotors 1 angeordnet Welle 6 im Wesentlichen die Symmetrieachse der zuvor genannten Magnete 2 und 3 bildet. Die Welle 6 ist stabförmig mit axial gleichbleibendem Durchmesser ausgeformt und dient der Übertragung des auf den Rotormagneten 2 ausgeübten Drehmoments durch ein von außen aufgeprägtes Magnetfeld eines Stators (nicht dargestellt), insbesondere ein durch Spulen erzeugtes Magnetfeld.

Der Sensormagnet 3 ist axial neben dem Rotormagnet 2 angeordnet, wobei sowohl dessen Innendurchmesser als auch dessen Außendurchmesser jeweils kleiner zu denen des Rotormagneten 2 sind. Insbesondere ist der Sensormagnet 3 in seiner Größe derart dimensioniert, dass dieser nicht in den Innenraum des Rotormagneten 3 eingesetzt bzw. angeordnet werden kann. Stattdessen bilden der Sensormagnet 3 und der Rotormagnet 2 an mindestens einem Berührungspunkt/- fläche (jeweils) einen Formschluss 11 aus, wodurch eine vorbestimmte Orientierung sowie Lage/Stellung zwischen den beiden Magneten 2 und 3 eingenommen und der Sensormagnet 3 verdrehsicher mit dem Rotormagneten 2 verbunden wird. Hierbei sind die beiden Magnete 2 und 3 im Wesentlichen parallel zueinander angeordnet. Die korrekte Anordnung der beiden Magnete 2 und 3 ist für die Funktionalität des Rotors wichtig. Insofern sind die sich abwechselnden Magnetpole des Sensormagneten 3 in einer bestimmten Weise auf die abwechselnden Magnetpole des Rotormagneten 2 ausgerichtet bzw. zu diesen angeordnet. Dadurch ist eine genaue Bestimmung der Stellung sowie der Geschwindigkeit des Rotormagneten 2 über die Messung des Sensormagneten 3, z.B. mittels eines Hall-Sensors (nicht dargestellt), möglich; die ist lediglich durch die strukturelle Ausformung der Magnete 2, 3 bedingt und benötigt keine zuvor durchgeführte gegenseitige Lagebestimmung und werkzeug-/prozesstechnische oder händische Ausrichtung dieser Magnete.

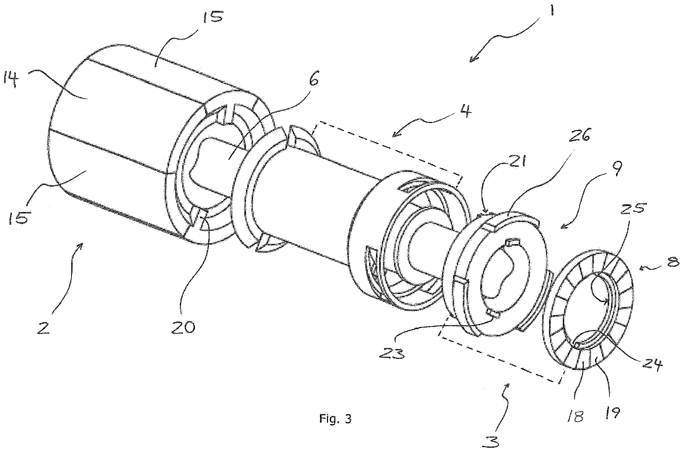

Der Sensormagnet 3 besteht aus einem ringförmigen Magnetelement 8 und einem Distanzstück 9, die über mindestens einen Formschluss (nicht dargestellt) in einer vorbestimmten Lage/Stellung orientiert sind und verdrehsicher gegenseitig in Wirkeingriff stehen. Das Magnetelement 8, auch als "Sensorspur" bezeichnet, und das Distanzstück 9, auch als "Rückschluss/-bauteil" bezeichnet, werden in den Fig. 2 und 3 im Detail beschrieben. Das Distanzstück 9 fungiert als eine Art Adapter, der mit dem Magnetelement 8 und dem Rotormagneten 2 in Wirkeingriff steht und das Magnetelement 8 mit dem Rotormagneten 2 mittels der zuvor genannten Formschlüsse in einer vorbestimmten Weise bzw. Stellung verdrehsicher verbindet.

Das Füllelement 4 wird aus in den Rotor 1 eingespritztem und anschließend ausgehärtetem Material, wie z.B. Kunststoff, gebildet und steht als einziges Teil des Rotors 1 in direkter Verbindung mit der Welle 6; diese kann in Form einer Presspassung der Welle 6 in das ausgehärtete Füllelement 4 oder in Form einer Umspritzung der Welle 6 durch des Füllelements 4 vorliegen. Des Weiteren ist das Füllelement 4 vollständig im restlichen Innenraum des Rotormagneten 2 eingespritzt und komplanar zu einer Seite des Rotormagneten 2 ausgebildet. Hierbei weist diese Seite des Rotormagneten 2 eine Formschlusskontur für einen Formschluss 12 mit dem Füllelement 4 auf, um eine verdrehsichere Verbindung zwischen den genannten Komponenten zu bilden. Auf der gegenüberliegenden Seite, an der der Sensormagnet 3 angeordnet ist und anliegt, ist das Füllelement 4 in den Innendurchmesser/-raum des Sensormagneten 3 eingespritzt und teilweise um diesen Magneten 3 umspritzt. Dadurch wird eine stabile und feste Verbindung zwischen Sensormagnet 3 und Rotormagnet 2 hergestellt; insbesondere bewirkt die Umspritzung durch das Füllelement 4, dass der Sensormagnet 3 nicht axial von dem Rotormagneten 2 verschoben werden kann. Das Füllelement 4 bildet mit dem Magnetelement 8 eine komplanare Ebene.

Fig. 2 zeigt eine perspektivische Ansicht auf den Rotor 1 aus Fig. 1. Neben den zuvor in Fig. 1 beschriebenen Komponenten sind der Rotormagnet 2, der Sensormagnet 3 und das Füllelement 4 genauer dargestellt. Der Rotormagnet 2 weist eine Vielzahl von bogenförmigen Abschnitten 14 und 15 (in diesem Ausführungsbeispiel insgesamt sechs Abschnitte) auf, die abwechselnd mit einer radial nach außen gerichtete magnetische Nord- bzw. Südpolung ausgeprägt sind. Diese Abschnitte 14 und 15 habe die gleiche Größe bzw. Dimensionierung und erstrecken sich axial von einem Ende/Seite des hohlzylinderförmigen Rotormagneten 2 zu dessen gegenüberliegenden Ende.

Das ringförmige Magnetelement 8 des Sensormagneten 3 weist eine Vielzahl von abwechselnd magnetisch polarisierten Ringsektoren auf, wobei die jeweiligen Polarisierungen axial zur Welle 6 ausgerichtet sind. An diesem Punkt wird darauf hingewiesen, dass alternativ oder zusätzlich die Polarisierungen radial zur Welle 6 ausgerichtet sein können.

Das Füllelement 4 ist sowohl im Innenraum, als auch am Außenumfang des Magnetelements 8 ausgebildet. Das Distanzstück 9 ist hauptsächlich durch das Füllelement 4 eingeschlossen bzw. verdeckt, wobei nur dessen bogenförmigen Außenblenden sichtbar sind; diese werden in Fig. 3 im Detail beschrieben. Die zylinderförmige Außenfläche des Füllelements 4 hat den gleichen Durchmesser wie das Distanzstück 9, insbesondere wie die sichtbaren Außenblenden.

Fig. 3 zeigt eine Explosionsansicht des Rotors 1 aus Fig. 1. Der Rotormagnet 2 weist auf der dem Sensormagneten zugewandten Seite zwei Formschlussnasen 20 auf, die mit den Formschlussnuten 21 des Distanzstücks 9 den zuvor beschriebenen Formschluss 11 bilden. Die Nasen 20 und Nuten 21 werden hierin allgemein als Formschlusskonturen bezeichnet und können in anderen Ausführungsformen unterschiedliche, aber gegenseitig komplementäre Formen aufweisen, um den Formschluss 11 zu bilden.

Aufgrund der Tatsache, dass die beiden Nasen 20 bzw. Nuten 21 nicht punktsymmetrisch zur Achse der Welle 6 (bzw. nicht um 180° versetzt) angeordnet sind, besteht nur eine Winkellage bzw. Stellung, in der das Distanzstück 9 und der Rotormagnet 2 in Wirkeingriff treten können, um beide Formschlüsse 11 auszubilden. Dadurch sind die korrekte bzw. vorbestimmte Anordnung der Komponenten 2, 9 und schlussendlich eine vorbestimmte Ausrichtung der Magnetpole des Rotormagneten 2 und des Sensormagneten 3 möglich.

Das Füllelement 4 wird in seiner ausgehärteten Form außerhalb des Rotormagneten 2 und des Sensormagneten 3 gezeigt, wobei das Füllelement 4 eine Negativform von Teilen aller Komponenten des Rotors 1 bildet. Die nach Außen sichtbaren Flächen werden durch entsprechende Werkzeuge (nicht dargestellt) gebildet, wenn z.B. mindestens der Rotormagnet 2 und der Sensormagnet 3 zueinander ausgerichtet und angeordnet sind und im Werkzeug mit einem Füllelement bildenden und spritzbaren Material verbunden werden.

Das Distanzstück 9 ist ring- bzw. hohlzylinderförmig geformt. Des Weiteren weist das Distanzstück 9 neben den zuvor genannten Formschlussnuten 21 (nur eines ist sichtbar) drei bogenförmige Außenblenden 26 auf, die am Außenumfang des Distanzstücks 9 äquidistant oder im gleichen Winkel zueinander angeordnet sind. Da sich die Außenblenden 26 über eine Auflagefläche des Distanzstücks 9 für das Magnetelement 8 erstrecken, dienen diese Blenden 26 als Begrenzungen für das Magnetelement 8.

Eine weitere Funktion der Außenblenden 26 liegt darin, mehrere Kanäle für das einzuspritzende Material für das Füllelement 4 zu bilden. Dadurch können sich, wie bei dem ausgehärteten Füllelement 4 erkennbar, entsprechende Ausnehmungen bzw. "Fenster" bilden, in denen die Außenblenden 26 angeordnet sind und das Distanzstück 9 an einem Loslösen von dem Rotormagneten 2 hindern.

Zusätzlich sind auf der Auflagefläche des Distanzstücks 9 an dessen Innenrand zwei Formschlussnasen 23 ausgeformt, die mit den beiden Formschlussnuten 24 des Magnetelements 8 jeweils Formschlüsse (nicht dargestellt) für eine verdrehsichere und vorbestimmte Anordnung des Distanzstücks 9 mit dem Magnetelement 8 bilden. Im Wesentlichen haben diese Formschlüsse die gleiche Funktion wie die durch die Nasen 20 und Nuten 21 ausbildbaren Formschlüsse 11 (nicht dargestellt).

Das Magnetelement 8 hat eine Sensorspur mit abwechselnd magnetisch polarisierten Abschnitten 18 und 19. Es ist auch möglich, dass das Magnetelement 8 mehrere Sensorspuren aufweist, um die Stellung und die Geschwindigkeit des Rotors 1 besser bzw. genauer zu messen. Am Innenumfang des Magnetelements 8 sind zwei Halbringe 25 ausgebildet, zwischen denen die genannten Formschlussnuten 24 geformt sind. Zusätzlich sind diese Halbringe 25 derart ausgebildet, dass diese nicht komplanar zur Oberfläche des Magnetelements 8 liegen und somit dem Füllelement 4 Ausbreitungsraum geben. Sobald das Füllelement 4 ausgehärtet ist, wird das Magnetelement 8 durch den Wirkeingriff zwischen Füllelement 4 und den Halbringen 25 an einem Loslösen von dem Distanzstück 9 gehindert.

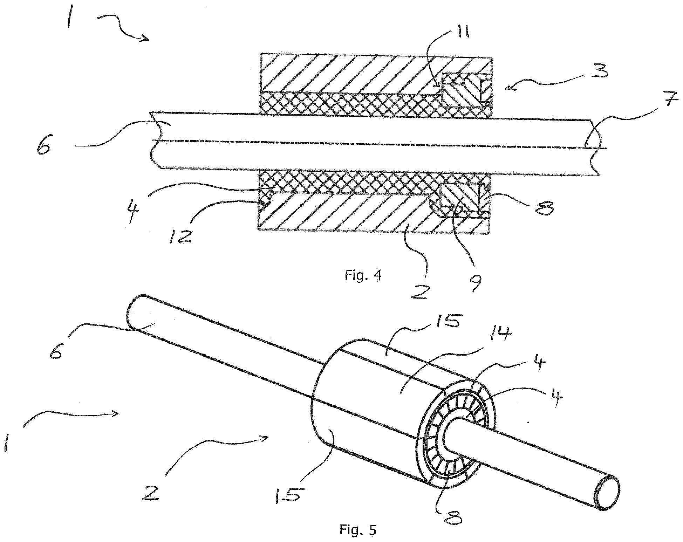

Fig. 4 zeigt einen Querschnitt durch einen weiteren Rotor 1 gemäß einem zweiten Ausführungsbeispiel der vorliegenden Erfindung. Bis auf den Rotormagneten 2 sind alle Komponenten des Rotors 1 identisch zu denen des Rotors aus Fig. 1 bis 3. Der Rotormagnet 2 ist zusätzlich mit einer senklochförmigen Vertiefung ausgebildet, die es einem in den Rotormagneten 2 eingesetzten Sensormagneten 3 erlaubt, dass die axial ausgerichtete Seite des Rotormagneten 2 und die Oberfläche des Sensormagneten 3, insbesondere die des Magnetelements 8, eine senkrecht zur Wellenachse 7 ausgerichtete Ebene bilden. Dies führt zu einer kompakteren Ausgestaltung des Rotors 1.

Fig. 5 zeigt eine perspektivische Ansicht auf den Rotor aus Fig. 4. Gut erkennbar sind die um und in dem Magnetelement 8 ausgeformten Bestandteile des Füllelements 4.

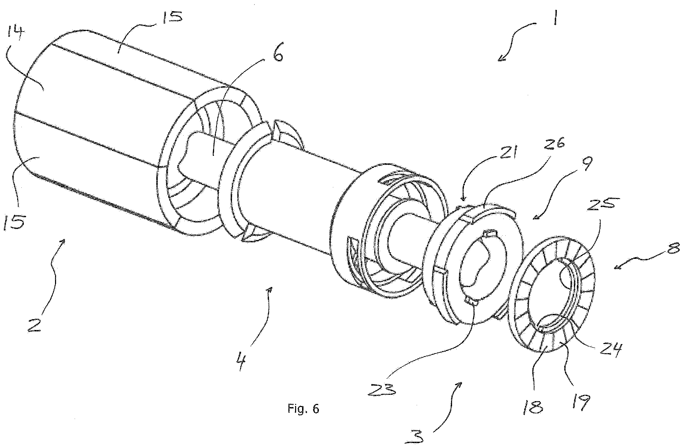

Fig. 6 zeigt eine Explosionsansicht auf den Rotor aus Fig. 4. Hierbei ist die auf einer Seite des Rotormagneten 2 ausgebildete Vertiefung dargestellt. Die entsprechenden Formschlussnasen 20 sind axial in das Innere des Rotormagneten 2 versetzt und somit bei dieser Ansicht nicht mehr sichtbar.

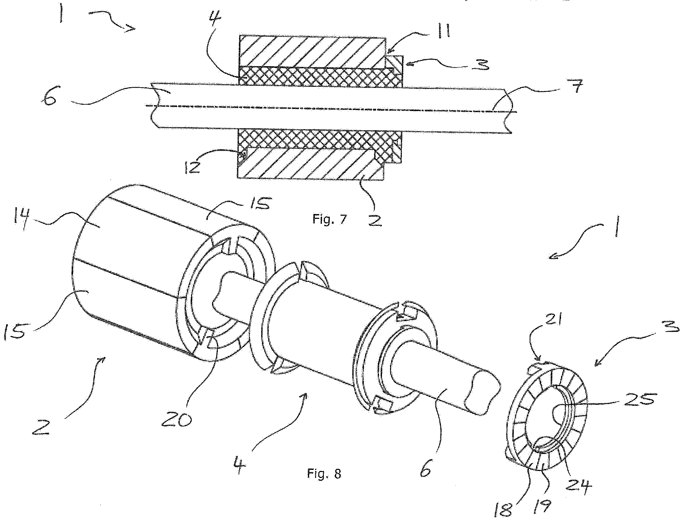

Fig. 7 zeigt einen Querschnitt durch einen anderen Rotor 1 gemäß einem dritten Ausführungsbeispiel der vorliegenden Erfindung. Bis auf den Sensormagneten 3 sind alle Komponenten des Rotors 1 identisch zu denen des Rotors aus Fig. 1. Als Besonderheit ist der Sensormagnet 3 nicht mehr zweistückig (aus Distanzstück 9 und Magnetelement 8), sondern einstückig ausgebildet. Daher sind auch nicht mehr die in dem ersten und zweiten Ausführungsbeispiel bekannten Außenblenden 26 notwendig, die das Distanzstück 9 an einem Loslösen hinderten. Stattdessen sind lediglich die inneren Halbringe 25 ausgebildet, um den Sensormagneten 3 mittels des Füllelements 4 an einem Loslösen zu hindern und somit diesen an den Rotormagneten 2 zu befestigen.

Fig. 8 zeigt eine Explosionsansicht auf den Rotor 1 aus Fig. 7, wobei der einteilige Sensormagnet 3 zu einer gegenüber den in Fig. 3 und 6 gezeigten unterschiedlichen Negativform des Füllelements 4 führt.

### Bezugszeichenliste

- 1: Rotor
- 2: Rotormagnet
- 3: Sensormagnet
- 4: Füll-/Verbindungselement
- 6: Welle
- 7: Wellen-/Rotorachse
- 8: Magnetelement
- 9: Distanzstück (auch als "Rückschlussbauteil" bezeichnet)
- 11: Formschluss (zwischen Rotormagnet und Sensormagnet)
- 12: Formschluss (zwischen Rotormagnet und Verbindungselement)
- 14: Abschnitt oder Teilelement mit nach außen gerichtetem Nordpol
- 15: Abschnitt oder Teilelement mit nach außen gerichtetem Südpol
- 17: Senke
- 18: Abschnitt oder Teilelement mit nach außen gerichtetem Nordpol
- 19: Abschnitt oder Teilelement mit nach außen gerichtetem Südpol
- 20: Formschlussnase/-zapfen des Rotormagnets (für Formschluss 11)
- 21: Formschlussnut des Distanzstücks (für Formschluss 11)
- 23: Formschlussnase/-zapfen des Distanzstücks
- 24: Formschlussnut des Magnetelements
- 25: Innerer Halbring des Magnetelements
- 26: Außenblende des Distanzstücks

## Patentansprüche

1. Rotor (1) für einen bürstenlosen Gleichstrommotor, mit einem Rotormagneten (2) und einem Sensormagneten (3) für die Positionserfassung des Rotormagneten (2);
**gekennzeichnet durch**
ein eingespritztes Füll-/Verbindungselement (4), das den Rotormagneten (2) und den Sensormagneten (3) miteinander fest verbindet, wobei der Rotormagnet (2) und der Sensormagnet (3) jeweils Formschlusskonturen aufweisen und verdrehsicher zueinander ausgerichtet sind.

2. Rotor (1) nach Anspruch 1,
**dadurch gekennzeichnet, dass**
der Rotormagnet (2) und der Sensormagnet (3) jeweils einstückig ausgebildet sind und eine Vielzahl von sich abwechselnden Magnetpolen (14, 15) aufweisen, wobei die Magnetpole (14, 15) radial zu einer Achse (7) des Rotors (1) ausgerichtet sind.

3. Rotor (1) nach Anspruch 1 oder 2,
**dadurch gekennzeichnet, dass**
der Rotor (1) mit einer Welle (6) fest verbunden und/oder geeignet ist, eine Welle (6) entlang der Rotorachse (7) aufzunehmen.

4. Rotor (1) nach einem der Ansprüche 1 bis 3,
**dadurch gekennzeichnet, dass**
der Rotormagnet (2) und/oder der Sensormagnet (3) eine Formschlusskontur zur Bildung des mindestens einen Formschlusses (11) aufweist, insbesondere in Form einer Nase, Keil, Rampe und/oder Rundung.

5. Rotor (1) nach Anspruch 4,
**dadurch gekennzeichnet, dass**
die Formschlusskonturen derart ausgebildet sind, dass diese bei einem axialen Zusammensetzen des Rotormagnets (2) mit dem Sensormagnet (3) selbstausrichtend sind.

6. Rotor (1) nach einem der Ansprüche 1 bis 5,
**dadurch gekennzeichnet, dass**
der Rotormagnet (2) und der Sensormagnet (3) mittels magnetischer Kräfte, die beim axialen Zusammensetzen des Rotormagnets (2) mit dem Sensormagnet (3) wirken, selbstausrichtend sind.

7. Rotor (1) nach einem der Ansprüche 1 bis 6,
**dadurch gekennzeichnet, dass**
der Sensormagnet (3) ein Magnetelement (8) und ein Distanzstück (9) aufweist, wobei die Formschlusskontur an dem Distanzstück (9) ausgebildet ist.

8. Rotor (1) nach einem der Ansprüche 1 bis 7,
**dadurch gekennzeichnet, dass**
das Füll-/Verbindungselement (4) zumindest teilweise oder vollständig unter oder um den Rotormagneten (2) und den Sensormagneten (3) gespritzt oder ausgebildet ist.

9. Rotor (1) nach einem der Ansprüche 1 bis 8,
**gekennzeichnet durch**
eine axiale Verliersicherung, die am hinteren Ende des Sensormagneten (3) in Form eines Formschluss, insbesondere eines Bundes, ausgebildet ist.

10. Rotor (1) nach einem der Ansprüche 1 bis 9,
**dadurch gekennzeichnet, dass**
die Formschlusskonturen des Rotormagneten (2) und des Sensormagneten (3) jeweils zueinander komplementär ausgebildet sind.

11. Rotor (1) nach einem der Ansprüche 1 bis 9,
**dadurch gekennzeichnet, dass**
die Formschlusskonturen des Rotormagneten (2) und des Sensormagneten (3) jeweils geeignet sind, mit einer Vorrichtung zum Herstellen des Rotors (1) verdrehsicher in Wirkeingriff zu treten.

12. Verfahren zur Herstellung eines Rotors (1) für einen bürstenlosen Gleichstrommotor, insbesondere eines Rotors (1) nach einem der vorhergehenden Ansprüche, aufweisend die folgenden Schritte
- Herstellen oder Bereitstellen eines Rotormagneten (2) und eines Sensormagneten (3), wobei eine Formschlusskontur zur Bildung mindestens eines gegenseitigen Formschluss (11) zwischen dem Rotormagneten (2) und dem Sensormagneten (3) als Verdrehsicherung bei dem Rotormagneten (2) und/oder dem Sensormagneten (3) ausgebildet ist/sind;
- Axiales Zusammenführen des Rotormagneten (2) und des Sensormagneten (3), wobei der Rotormagnet (2) und der Sensormagnet (3) durch die Formschlusskontur in eine vorbestimmte Stellung zueinander geführt werden und verdrehsicher miteinander in Wirkeingriff treten; und
- Zumindest teilweises Unter- oder Umspritzen der zusammengeführten Magnete (2, 3) mit einem Füll- oder Verbindungswerkstoff zur Fixierung von Rotormagnet (2) und Sensormagnet (3).

13. Verfahren nach Anspruch 10,
**dadurch gekennzeichnet, dass**
das axiale Zusammenführen durch eine von außen auf mindestens einen der Magnete (2, 3) gerichtete Kraft und/oder durch zwischen diesen Magneten (2, 3) wirkende magnetische Kräfte erfolgt.

14. Verfahren nach Anspruch 10 oder 11,
**dadurch gekennzeichnet, dass**
das Herstellen des Rotormagneten (2) und des Sensormagneten (3) ein Binden von Magnetwerkstoffen mit Kunststoff und/oder ein Sintern eines Magneten (2, 3) und ein Umspritzen des gesinterten Magneten (2, 3) mit Kunststoff aufweist.

15. Verfahren nach einem der Ansprüche 10 bis 12,
**dadurch gekennzeichnet, dass**
vor dem axialen Zusammenführen der Rotormagnet (2) und der Sensormagnet (3) axial zueinander angeordnet werden.
